(19) Europäisches Patentamt
European Patent Office
Office européen des brevets

(11) **EP 3 122 032 A1**

(12) **EUROPEAN PATENT APPLICATION**

(43) Date of publication:
**25.01.2017 Bulletin 2017/04**

(51) Int Cl.:
*H04N 1/60* (2006.01)    *G06T 5/00* (2006.01)

(21) Application number: **15306188.2**

(22) Date of filing: **22.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• ANDRIVON, Pierre
  35576 CESSON SEVIGNE (FR)
• LASSERRE, Sebastien
  35576 CESSON SEVIGNE (FR)
• BORDES, Philippe
  35576 CESSON SEVIGNE (FR)

(74) Representative: **Huchet, Anne**
**TECHNICOLOR**
**1-5, rue Jeanne d'Arc**
**92130 Issy-les-Moulineaux (FR)**

(54) **A METHOD AND DEVICE FOR ESTIMATING A COLOR MAPPING BETWEEN TWO DIFFERENT COLOR-GRADED VERSIONS OF A PICTURE**

(57)    The present disclosure relates to a method and device for estimating a color mapping between a first and a second color-graded version of a picture by iteratively estimating a color mapping function that maps each color value of said first color-graded version of the picture represented in a first color volume onto a color value of said second color-graded version of the picture represented in a second color volume. The method is characterized in that it comprises obtaining (100) a first estimate of the color mapping by:

- obtaining (200) a first sub-set of color values from the color values of said first color-graded version of the picture and a second sub-set of color values from the color values of said second color-graded version of the picture; ;
- obtaining (220) iteratively the first estimate of the color mapping function, from a default color mapping, by mapping the first set of color values onto the second set of color values.

Fig. 1

**Description**

**1. Field**

The disclosure relates to the color mapping domain. In particular, it relates to a method for estimating a color mapping between a first color-graded version of a picture and a second color-graded version of said picture.

**2. Background**

In light of the foregoing, aspects of the present disclosure are directed to creating and maintaining semantic relationships between data objects on a computer system. The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

In the following, a picture contains one or several arrays of samples (pixel values) in a specific picture/video format which specifies all information relative to the pixel values of a picture (or a video) and all information which may be used by a display and/or any other device to visualize and/or decode a picture (or video) for example. A picture comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A color gamut is a certain complete set of colors. The most common usage refers to a set of colors which can be accurately represented in a given circumstance, such as within a given color space or by a certain output device.

A color volume is defined by a color space and a dynamic range of the values represented in said color space.

For example, a color volume is defined by a RGB ITU-R Recommendation BT.2020 color space and the values represented in said RGB color space belong to a dynamic range from 0 to 4000 nits (candela per square meter). Another example of color volume is defined by a RGB BT.2020 color space and the values represented in said RGB color space belong to a dynamic range from 0 to 1000 nits.

Color-grading a picture (or a video) is a process of altering/enhancing the colors of the picture (or the video). Usually, color-grading a picture involves a change of the color volume (color space and/or dynamic range) or a change of the color gamut relative to this picture. Thus, two different color-graded versions of a same picture are versions of this picture whose values are represented in different color volumes (or color gamut) or versions of the picture whose at least one of their colors has been altered/enhanced according to different color grades. This may involve user interactions.

For example, in cinematographic production, a picture and a video are captured using tri-chromatic cameras into RGB color values composed of 3 components (Red, Green and Blue). The RGB color values depend on the tri-chromatic characteristics (color primaries) of the sensor. A first color-graded version of the captured picture is then obtained in order to get theatrical renders (using a specific theatrical grade). Typically, the values of the first color-graded version of the captured picture are represented according to a standardized YUV format such as BT.2020 which defines parameter values for Ultra-High Definition Television systems (UHDTV).

Then, a Colorist, usually in conjunction with a Director of Photography, performs a control on the color values of the first color-graded version of the captured picture by fine-tuning/tweaking some color values in order to instill an artistic intent.

A second color-graded version of the captured picture is also obtained to get home release renders (using specific home, Blu-Ray Disk/DVD grade). Typically, the values of the second color-graded version of the captured picture are represented according to a standardized YUV format such as ITU-R Recommendation BT.601 (Rec. 601) which defines studio encoding parameters of Standard Digital Television for standard 4:3 and wide-screen 16:9 aspect ratios, or ITU-R Recommendation BT.709 which defines parameter values for High Definition Television systems (HDTV).

Obtaining such a second color-graded version of the captured picture usually comprises stretching the color volume of the first color-graded version of the captured picture (for example RGB BT.2020 1000 nits modified by the Colorist) in order that the second color-graded version of the captured picture belong to a second color volume (RGB BT.709 1000 nits for example). This is an automatic step which uses a default color mapping function (for example for mapping of RGB BT.2020 format to RGB BT.709) usually approximated by a three dimensional look-up-table (also called 3D LUT). Note that all the considered YUV formats are characterized with the Color primaries parameters that allow defining any RGB-to-YUV and YUV-to-RGB color mappings.

Then, a Colorist, usually in conjunction with a Director of Photography, performs a control on the color values of the second color-graded version of the captured picture by fine-tuning/tweaking some color values in order to instill the artistic intent in the home release.

It is known to explicitly signal a default color mapping to a display, such as the YUV-to-RGB color mapping, so that the display is able to apply the appropriate default color mapping. Moreover, when the color mapping uses parameters calculated from a first and second color-graded version of a picture, it is known that those parameters are also signaled to the display so that the display is able to apply the appropriate default color mapping with appropriate parameters.

Using a default color mapping fails to preserve the artist intent because some colors, as specified by the colorist, in the second color-graded version of a picture may not be preserved when the default color mapping is applied on the first color-graded version of the picture.

For example, memory color such as flesh or skin tones, blue sky or green grass shades...etc, should be preserved when specified by the colorist for a given grade.

There is thus a need of a method for estimating a color mapping between two different color-graded versions of a picture which preserves the artist intent.

The specific nature of the disclosure as well as other objects, advantages, features and uses of the disclosure will become evident from the following description of embodiments taken in conjunction with the accompanying drawings.

## 3. Summary

In light of the foregoing, aspects of the present disclosure are directed to creating and maintaining semantic relationships between data objects on a computer system. The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy some of the drawbacks of the prior art with a method for 1 estimating a color mapping between a first and a second color-graded version of a picture by iteratively estimating a color mapping function that maps each color value of said first color-graded version of the picture represented in a first color volume onto a color value of said second color-graded version of the picture represented in a second color volume. The method is characterized in that it comprises obtaining a first estimate of the color mapping by:

- obtaining a first sub-set of color values from the color values of said first color-graded version of the picture and a second sub-set of color values from the color values of said second color-graded version of the picture; ;
- obtaining iteratively the first estimate of the color mapping function, from a default color mapping, by mapping the first set of color values onto the second set of color values.

Obtaining a first set of colors values represented in the first color volume and a second set of colors values represented in the second color volume allows a Colorist to preserve some color matching between colors of the two color volumes.

Consequently, the method allows getting a first estimate of the color mapping function that is close to the final expected estimate of this color mapping function calculated over the whole sets of colors. This improves performances of the iterative method for estimating the color mapping function because few iterations are required and local minima are avoided during the iterative process.

Moreover, estimating the first estimate of the color mapping function from sets of color values reduces the computing cost and bandwidth because a good estimate may be obtained from a number of color values which is highly lower than the data to handle when estimating the color mapping function from a whole picture and from each picture of a sequence of pictures.

According to an embodiment, the first set of color values and/or the second set of color values is obtained by taking into account a visual human perception model.

According to an embodiment, the color mapping and/or the default color mapping function is approximated by a three-dimensional look-up-table.

According to an embodiment, the first set of color values and/or the second set of color values is obtained either from color values associated with vertices of the three-dimensional look-up-table or by interpolating color values associated with vertices of the three-dimensional look-up-table or both.

According to an embodiment, the default color mapping function and/or the color mapping function comprises at least one color transforms, each color transform being approximated by a one-dimensional look-up-table.

According to an embodiment, the color mapping and/or the default color mapping comprises a color transform which is represented by a matrix.

According to an embodiment, the color mapping function comprises a first and a second color transforms, and wherein obtaining the first estimate of the color mapping function by mapping the first set of color values onto the second set of color values comprises:

a) obtaining a third set of color values by applying the first color transform estimated at iteration k-1 to the first sub-set of color values;

b) estimating a third color transform by mapping the second sub-set of color values onto the third set of color values;

c) obtaining a fourth set of color values by applying said third color transform to the second sub-set of color values;

d) estimating the first color transform by mapping the first sub-set of color values onto said fourth set of color values; said first color transform is used for updating the first color transform estimated at iteration k-1;

e) obtaining a fifth set of color values by applying said first color transform to the first sub-set of color values; and

f) estimating the second color transform by mapping the fifth set of color values S5 onto the second sub-set of color values.

According to an embodiment, the method further comprises obtaining iteratively a final estimate of the color mapping from the first estimate of the color mapping by mapping the color values of the first color-graded version of the picture onto the color values of the second color-graded version of said picture.

According to another of its aspects, the present disclosure relates to a device for estimating a color mapping between a first and a second color-graded version of a picture, the device comprising a processor configured to iteratively estimate a color mapping function that maps each color value of said first color-graded version of the picture represented in a first color volume onto a color value of said second color-graded version of the picture represented in a second color volume. The processor is further configured to obtain a first estimate of the color mapping by:

- obtaining a first sub-set of color values from the color values of said first color-graded version of the picture and a second sub-set of color values from the color values of said second color-graded version of the picture; ;
- obtaining iteratively the first estimate of the color mapping function, from a default color mapping, by mapping the first set of color values onto the second set of color values.

According to other of its aspects, the disclosure relates to a computer program product comprising program code instructions to execute the steps of the above method when this program is executed on a computer, a processor readable medium having stored therein instructions for causing a processor to perform at least the steps of the above method, and a non-transitory storage medium carrying instructions of program code for executing steps of the above method when said program is executed on a computing device.

## 4. Brief description of Drawings

In the drawings, an embodiment of the present disclosure is illustrated by the following figures:

- **Fig. 1** shows schematically a method for estimating a color mapping CM between a first color-graded version of a picture whose values are represented in a first color volume and a second color-graded version of said picture whose values are represented in a second color volume according to a specific and non-limiting embodiment of the disclosure;
- **Fig. 2** schematically illustrates an embodiment of the step 100 for obtaining a first estimate of the color mapping function;
- **Fig. 3** schematically illustrates an example of a color mapping function;
- **Fig. 4** schematically illustrates an example for estimating a color mapping function comprising two color transforms;
- **Fig. 5** schematically illustrates an example for estimating a color mapping function comprising three color transforms;
- **Fig. 6** schematically illustrates an example of a 3D LUT approximating a color mapping function;
- **Fig. 7** schematically illustrates a color mapping function comprising color transforms approximated by one-dimensional piecewise linear functions and a matrix;
- **Fig. 8** shows an example of a one-dimensional piecewise linear function **f;**
- **Fig. 9** shows an example of an architecture of a device in accordance with an embodiment of the disclosure.

## 6. Description of Embodiments.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

The disclosure is described for estimating a color mapping between a first color-graded version of a picture and a second color-graded version of said picture but extends to estimating a color mapping between a first color-graded version of pictures of a sequence of pictures and a second color-graded version of pictures of said sequence of pictures because the pictures of said sequence of pictures are sequentially and independently color-mapped as described below.

Estimating a color mapping between a first color-graded version of a picture and a second color-graded version of said picture may be a step of a method for processing a picture or a video.

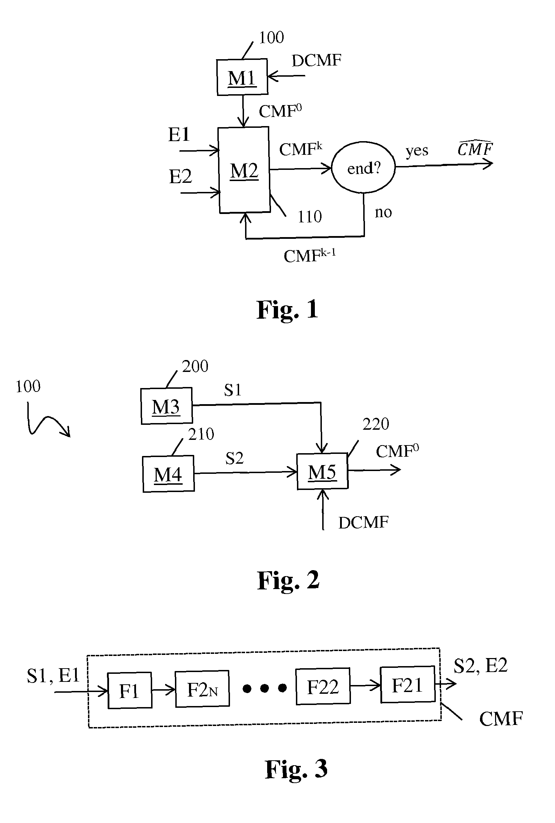

**Fig. 1** shows schematically a method for estimating a color mapping CM between a first color-graded version E1 of a picture whose values are represented in a first color volume and a second color-graded version E2 of said picture whose values are represented in a second color volume according to a specific and non-limiting embodiment of the disclosure.

Estimating the color mapping CM from two color-graded versions of a same picture means estimating iteratively a color mapping function CMF that optimally maps each color value of the first color-graded version E1 onto a color value of the second color-graded version E2 of said picture.

In step 100, a module M1 obtains a first estimate $CMF^0$ of the color mapping function CMF from a default color mapping function DCMF defined for mapping each color value represented in the first color volume onto a color value represented in the second color volume.

At each iteration **k (k** is an integer value) (step 110), a module M2 obtains an estimate $CMF^k$ of the color mapping function CMF by mapping each color value of the first color-graded version E1 of the picture onto a color value of the second color-graded version E2 of the picture using an estimate $CMF^{k-1}$ of the color mapping CMF calculated previously (iteration **k-1**).

The step 110 is repeated until a criterion is reached. A final estimate $\widehat{CMF}$ , equals to the estimate $CMF^p$ with **p** (the last iteration) is thus obtained.

The criterion is reached for example when a maximum number of iterations **k** is reached or when the Euclidean distance between two successive estimates of the second color-graded version E2 of the picture, obtained by applying estimates $CMF^{k-1}$ and $CMF^k$ (calculated during two successive iterations) of the color transform function CMF to the first color-graded version E1 of the picture, is below a predefined threshold.

Alternatively, the criterion is reached when the Euclidean distance between an estimate of the second color-graded version E2 of the picture obtained by applying an estimates $CMF^k$ (of the color transform function CMF) to the first color-graded version E1 of the picture and the second color-graded version E2 of the picture, is below a predefined threshold.

**Fig. 2** shows schematically an embodiment of the step 100 for obtaining a first estimate $CMF^0$ of the color mapping function CMF.

In step 200, a module M3 obtains a first sub-set of color values S1 from the color values of the first color-graded version E1 of the picture.

In step 210, a module M4 obtains a second sub-set of color values S2 from the color values of the second color-graded version E2 of the picture.

In step 220, a module M5 obtains iteratively the first estimate $CMF^0$ of the color mapping CMF, from a default color mapping, by mapping each color of the first sub-set of color values S1 onto a color value of the second sub-set of color values S2, i.e. obtaining the first estimate $CMF^0$ that optimally maps the first sub-set of color values S1 onto the second sub-set of color values S2.

The default color mapping function DCMF is defined for mapping each color value represented in the first color volume onto a color value represented in the second color volume.

For example, only the dynamic ranges of the first and second color volume are different. The first color volume may be defined, for example, by using a RGB BT.2020 color space and the dynamic range of the values between 0 to 4000 nits (candela per square meter) and the second color volume is defined using a RGB BT.2020 color space and the dynamic range of the values between 0 to 1000 nits (candela per square meter).

According to another example, only the color gamuts of the first and second color volumes are different. The first color volume is defined, for example, by using a RGB BT.2020 color space and the dynamic range of the values between 0 to 1000 nits (candela per square meter) and the second color volume is defined using a RGB BT.709 color space and the dynamic range of the values between 0 to 1000 nits (candela per square meter).

According to another example, only the color spaces of the first and second color volumes are different. The first color volume is defined, for example, by using a RGB BT.2020 color space and the dynamic range of the values between 0 to 1000 nits (candela per square meter) and the second color volume is defined using a YUV BT.2020 color space and the dynamic range of the values between 0 to 1000 nits (candela per square meter).

The disclosure is not limited to these examples of color volumes and it is obvious that the first and second color volumes may be defined having more than one of these differences (color gamut, color space, dynamic range).

According to an embodiment of step 100, the first estimate $CMF^0$ is calculated according to the iterative method described in relation with the **Fig. 1** from two color-graded versions of a sample picture, for example extracted from a sequence of pictures.

Obtaining a first estimate of a color mapping function CMF by using such a method requires that a default color mapping DCMF be known, i.e. a first estimate of each color transform Fq be known.

For example, said default color mapping function DCMF is the identity function, i.e the first estimate of each color transform Fq is the identity function.

According to another example, the first estimate of the color transforms are color mapping functions that transform the color space of the first color volume to the color space of the second color volume. Such color transforms are defined, for example, by the standard SMPTE RP 177.

According to an embodiment of the step 100, the first estimate $CMF^0$ is obtained from either a local or remote memory or from a communication network.

The disclosure is not limited to a specific embodiment for obtaining the first (respectively second) set of color values.

According to an embodiment, the first (respectively second) sub-set of color values is selected by an end-user.

According to an embodiment, the first (respectively second) sub-set of color values is obtained by taking into account a visual human perception model.

The first (respectively second) sub-set of color values is thus obtained according to content characteristics and allows, for instance, preservation of the color values corresponding to colors representative of flesh tones that may be kept constant all along a sequence of pictures when estimating the color mapping.

For example, the color values of the first (respectively second) sub-set of color values are obtained by taking into account a saliency map obtained from the picture.

According to another example, the first (respectively second) sub-set of color values gathers color values which are close to each other for the human visual system according to a metric defined in a perceptual uniform color space such as CIELUV or CIELab for example.

According to an embodiment of the method, illustrated in **Fig. 3,** the color mapping function CMF comprises at least two color transforms F1, F21, F22, ... F2$_N$.

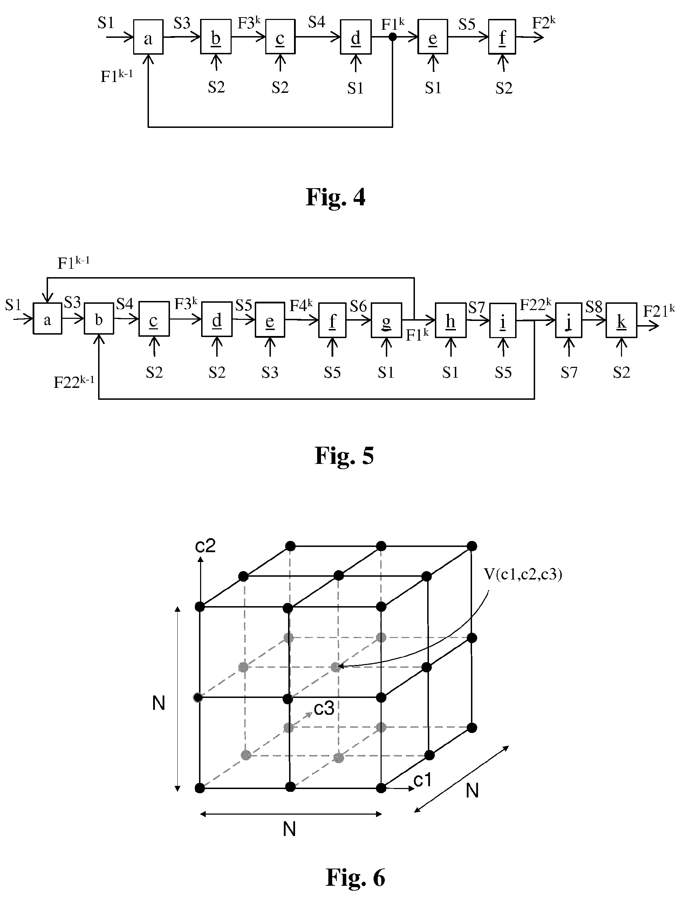

Obtaining a first estimate $CMF^0$ of said color mapping function CMF from the first S1 and the second S2 sub-sets of color values is illustrated **in Fig. 4** when the color mapping function CMF comprises a first color transform F1 and a second color transform F2. The same estimating method applies for obtaining the final estimate $\widehat{CMF}$ of the color mapping function CMF from the first E1 and second E2 color-graded versions of the picture.

Estimating the two color transforms F1 and F2 is an iterative process which comprises for each iteration k, k being an integer:

> a) obtaining a third set of color values S3 by applying a first color transform $F1^{k-1}$ estimated at iteration (k-1) to the first sub-set of color values S1;
> b) estimating a third color transform $F3^k$ by mapping the second sub-set of color values S2 onto the third set of color values S3;
> c) obtaining a fourth set of color values S4 by applying said third color transform $F3^k$ to the second sub-set of color values S2;
> d) estimating a first color transform $F1^k$ by mapping the first sub-set of color values S1 onto said fourth set of color values S4; said first color transform $F1^k$ is used for updating the first color transform $F1^{k-1}$;
> e) obtaining a fifth set of color values S5 by applying said first color transform $F1^k$ to the first sub-set of color values S1; and
> f) estimating a second color transform $F2^k$ by mapping the fifth set of color values S5 onto the second sub-set of color values S2.

The disclosure is not limited to a color mapping function CMF comprising a first color transform F1 and a second color transform F2 but extends to any color mapping comprising more than two color transforms.

For illustrative purpose, **Fig. 5** illustrates how a first estimate of a color mapping function CMF is obtained when it comprises three color transforms F1, F21 and F22. The same estimating method applies for obtaining a final estimate of the color mapping function CMF from the first E1 and second E2 color-graded versions of the picture.

For each iteration k, k being an integer:

> a) obtaining a third set of color values S3 by applying a first color transform $F1^{k-1}$, estimated at iteration (k-1), to the first sub-set of color values S1;
> b) obtaining a fourth set of color values S4 by applying the color transform $F22^{k-1}$, estimated at iteration (k-1), to the third set of color values S3;
> c) estimating a third color transform $F3^k$ by mapping the second sub-set of color values S2 onto the fourth set of color values S4;
> d) obtaining a fifth set of color values S5 by applying said third color transform $F3^k$ to the second sub-set of color values S2;
> e) estimating a forth color transform $F4^k$ by mapping the fifth set of color values S5 onto the third set of color values S3;
> f) obtaining a sixth set of color values S6 by applying said forth color transform $F4^k$ to the fifth set of color values S5;
> g) estimating a first color transform $F1^k$ by mapping the first sub-set of color values S1 onto the sixth set of color values S6; said first color transform $F1^k$ is used for updating the first color transform $F1^{k-1}$;
> h) obtaining a seventh set of color values S7 by applying said forth color transform $F1^k$ to the first sub-set of color values S1;
> i) estimating the color transform $F22^k$ by mapping the seventh set of color values S7 onto said fifth set of color values S5; said color transform $F22^k$ is used for updating the color transform $F22^{k-1}$;
> j) obtaining a eighth set of color values S8 by applying said color transform $F22^k$ to the seventh set of color values S7; and
> l) estimating the color transform $F21^k$ by mapping said eighth set of color values S8 onto the second sub-set of color values S2.

It is not mandatory that the last step l) be executed at each iteration. This step shall be executed at least once, after the last iteration.

According to an embodiment, the step l) is executed at each iteration when, for example, the criterion (to stop or not the iterative method) requires the estimate of the color transform $F21^k$ at each iteration in order to evaluate in order to evaluate a criterion to stop the iterative method described in relation with **Fig. 2.**

The principle for estimating color transforms may be easily extended according to **Fig. 4** and **Fig. 5** to any color mapping function comprising any number of color transforms.

According to an embodiment of method described in relation with **Fig. 1,** the color mapping function CMF to be estimated comprises at least two color transforms.

Said at least two color transforms are estimated by a method as described above in relation with **Fig. 4** when two color transforms are used, with **Fig. 5** when three color transforms are used and by a method inspired of these two methods when the color mapping function CMF comprises more than three color transforms.

Note that the remarks about the default color mapping function DCMF given in relation with **Fig. 4** and **Fig. 5** apply for the color mapping function CMF.

According to an embodiment of the method, the color mapping CMF (and/or default color mapping DCM) is approximated by a three-dimensional look-up-table (3D LUT).

**Fig. 6** shows schematically an example of a 3D LUT approximating a specific color mapping function (CMF or DCMF).

The 3D LUT associates with at least one color value represented in a first color volume with a color value represented in a second color volume (different of the first color volume).

A 3D LUT allows for partitioning the first color volume into a set of regions delimited by the vertices of the 3D LUT. Exemplarily, a 3D LUT associates a set of color values with a triplet of color values in the first color volume. The set of color values can be a triplet of color values in the second color volume or a set of color values representative of the color transform (e.g. locally defined color mapping function parameters) used to transform color values in the first color volume into color values in the second color volume.

On **Fig. 6,** a square 3D LUT is represented as a lattice of NxNxN vertices. For each vertex $V(c_1,c_2,c_3)$ of the 3D LUT, a corresponding triplet of color values $(V_{c1}, V_{c2}, V_{c3})$ needs to be stored. The amount of data associated with the 3D LUT is NxNxNxK, where K is the amount of bits used to store one 3D LUT triplet value. The triplet value is for example a (R, G, B) triplet, a (Y, U, V) triplet or a (Y, Cb,Cr) triplet, etc.

According to an embodiment of the step 200, the first (respectively second) sub-set of color values is obtained either from color values associated with vertices of the 3D LUT or by interpolating color values associated with vertices of the 3D LUT or both.

The three-dimensional look-up-table is defined by vertices as explained in relation with **Fig. 6.** Thus, each vertex defines a color value represented in a color volume. But, usually, the vertices of a 3D LUT do not define all the possible color values of the color volume because the number of vertices would be huge (and the storing and/or transmitting cost of the 3D LUT too expensive). Thus, color values may also be obtained by interpolating the color values relative to some vertices of the 3D LUT.

This embodiment is advantageous when the 3D LUT approximates a default color mapping function calculated between a first version of a picture color-graded according to a first grade and a second version of said picture color-graded according to a second color grade because, in that case, a first sub-set of color values may be a sample of color values close to the color values of the first color-graded version (possibly slightly modified by a colorist).

Applying the 3D LUT on such a first sub-set of color values allows obtaining a second sub-set of color values which is a sample of color values close to the color values of the second color-graded version of the picture (possibly slightly modified by a colorist). Consequently, the first estimate of the color mapping function is close to its final estimate. This embodiment, thus, improves the iterative method for estimating the color mapping function if it is based on error minimization between second sub-set of color and the first sub-set of color mapped with the mapping function, because local minima are avoided during the iterative process.

According to an embodiment of the method, the default color mapping function DCMF and/or the color mapping function CMF comprises at least two color transform, each color transform being approximated by a one-dimensional look-up-table.

This embodiment is advantageous because approximating a color mapping function by a combination of existing one-dimensional non-linear mapping functions already implemented in many screen, displays and TV is possible. They could be used to implement any kind of color transform, e.g. in the case where the color grading is color space dependent.

According to an embodiment of the method, the default color mapping function DCMF and/or the color mapping function CMF comprises a color transform which is represented by a matrix.

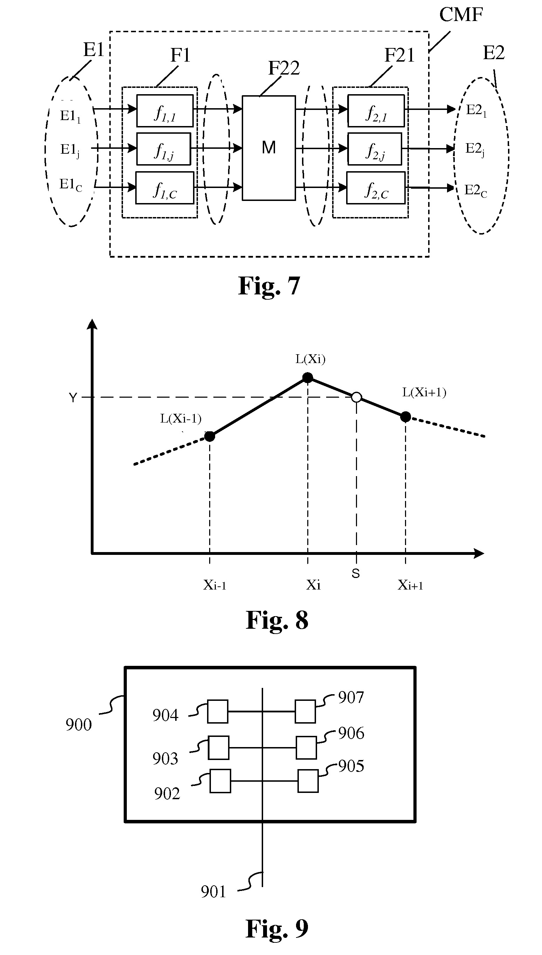

According to a non-limiting embodiment of the method, illustrated in **Fig. 7,** the color mapping function CMF comprises a color transform F1 which is approximated by C one-dimensional piecewise linear functions $f_{ij}$ ($j \in \{1, ..., C\}$), a second color transform F21 which is approximated by C one-dimensional piecewise linear functions $f_{2,j}$ ($j \in \{1, ..., C\}$) and a linear matrix M (that may be considered as being another color transform F22). C is an integer number equals to the number of components of the picture. Usually C=3 as illustrated in **Fig. 7.**

The color transforms F1, F21 and F22 are then estimated as described in **Fig. 5** in which the third color transform $F3^k$ is also approximated by C one-dimensional piecewise linear functions $f_{3,j}$ ($j \in \{1, ..., C\}$) and the forth color transform $F4^k$ is a matrix.

Each one-dimensional piecewise linear function $f_{1,j}$, $f_{2,j}$ or $f_{3,j}$ is estimated by mapping the **j** component of the color values belonging to an input set of color values, here $E1_j$, onto the **j** component of color values belonging to an output set of color values, here $E2_j$. For example, the input set of color values is the first sub-set of color values S1 and the output set of color values is the sixth set of color values S6 when a one-dimensional piecewise linear function $f_{1,j}$ is estimated.

The disclosure is not limited by a specific method for estimating one-dimensional piecewise linear function by mapping a component of the color values belonging to an input set of color values onto a component of color values belonging to an output set of color values.

For example, the method of Cantoni et al. ("Optimal Curve Fitting With Piecewise Linear Functions," IEEE Transactions on Computers, Vol. C-20, No1, January 1971) as described in relation with **Fig. 8,** may be used.

**Fig. 8** shows an example of a one-dimensional piecewise linear function **f.**

A one-dimensional piece-wise linear function $f$ is defined by intervals $[X_i;X_i+1]$ and is linear in each interval. Note we consider here the case the intervals have equal range (equal to 1) for simplicity, but equivalent reasoning can apply to the general case (un-equal ranges). Then the values $X_i$ are considered as known.

For a given point with abscise $s \in [X_i;X_i+1]$, the corresponding image by $f$ is $y$ such as:

$$y = f(s) = L(X_i) + (L(X_i+1)-L(X_i))^*(s-X_i)$$

One has to find the optimal values for the $L(X_i)$ for example by using a Least Square Minimization (LSM) method that minimizes the sum of the quadratic errors $Err(X_i) = (y_o - f(s_o))^2$ for the set of sample values $(s_o,y_o)$, with $s_o \in [X_i ; X_i+1]$ is a color values of the input set of color values and $y_o$ is a color value of the output set of color values, for each interval $[X_i ; X_i+1]_{i=0,...T}$. T is either a fixed integer value or a value to be optimized.

The Least Square Minimization (LSM) method consists in solving the set of equations of partial derivative of $Err(X_i)$ respectively to $L(X_i)_{i=0,..T}$ equal to zero.

$$\frac{\partial \text{Err}}{\partial L_{X_i-1}} = \sum_m -2\big(y_m - f(s_m)\big)(-s_m + X_i) = 0 \text{ with } s_m \in [X_i\text{-}1 ; X_i] \qquad (1)$$

$$\frac{\partial \text{Err}}{\partial L_{X_i}} = \sum_m -2\big(y_m - f(s_m)\big)(s_m - X_i + 1) - \sum_o 2\big(y_o - f(s_o)\big)(1 - s_o +$$

$$X_i) = \text{ with } s_m \in [X_i\text{-}1 ; X_i], s_o \in [X_i ; X_i+1] \quad (2)$$

$$\frac{\partial \text{Err}}{\partial L_{X_i+1}} = \sum_o -2\big(y_o - f(s_o)\big)(s_o - X_i) = 0 \quad \text{ with } s_o \in [X_i ; X_i+1] \qquad (3)$$

The value of $L(X_i)$ determines the function $f$ on both intervals $[X_i\text{-}1 ; X_i]$ and $[X_i ; X_i+1]$:

$$y = f(s_m) = L(X_i\text{-}1) + (L(X_i)-L(X_i\text{-}1))^*(s_m-X_i+1) \quad \text{ if } s_m \in [X_{i-1} ; X_i] \qquad (4)$$

and

$$y = f(s_o) = L(X_i) + (L(X_i+1)-L(X_i))^*(s_o-X_i) \quad \text{ if } s_o \in [X_i ; X_i+1] \qquad (5)$$

Once replacing $f(s_m)$ and $f(s_o)$ in equations (1-3) by their expressions given by equations (1) and (2), one obtains the following equations:

$$\begin{cases} Z_{i-1} = a_{i-1,i-1} \times L(X_i - 1) + a_{i-1,i} \times L(X_i) \\ Z_i = a_{i,i-1} \times L(X_i - 1) + a_{i,i} \times L(X_i) + a_{i,i+1} \times L(X_i + 1) \\ Z_{i+1} = a_{i+1,i} \times L(X_i) + a_{i+1,i+1} \times L(X_i + 1) \end{cases}$$

Applying the same reasoning for the other intervals, one obtains the following system:

$$\begin{pmatrix} Z_0 \\ \vdots \\ \vdots \\ \vdots \\ Z_N \end{pmatrix} = \begin{pmatrix} a_{0,0} & a_{0,1} & 0 & \cdots & & \cdots & 0 \\ a_{1,0} & a_{1,0} & a_{1,2} & 0 & & \ddots & \vdots \\ 0 & a_{2,1} & a_{2,2} & a_{2,3} & & 0 & \vdots \\ 0 & \ddots & & & & & 0 \\ \vdots & \ddots & 0 & a_{N-1,N-2} & a_{N-1,N-1} & a_{N-1,N} \\ 0 & \cdots & \cdots & 0 & a_{N,N-1} & a_{N,N} \end{pmatrix} \begin{pmatrix} L(X_0) \\ \vdots \\ \vdots \\ \vdots \\ L(X_N) \end{pmatrix}$$

The disclosure is not limited by a specific method for estimating a matrix (M or the forth color transform F4$^k$) by mapping an input set of color values onto an output set of color values.

For example, when C equals 3 (three color components per color value), estimating a 3x3 matrix $\begin{pmatrix} g_{0,0} & g_{0,1} & g_{0,2} \\ g_{1,0} & g_{1,1} & g_{1,2} \\ g_{2,0} & g_{2,1} & g_{2,2} \end{pmatrix}$ by mapping an input set of color values $\begin{pmatrix} X_0 \\ X_1 \\ X_2 \end{pmatrix}$ onto an output set of color values $\begin{pmatrix} Y_0 \\ Y_1 \\ Y_2 \end{pmatrix}$ comprises solving 3 linear systems of three equations each:

$$\begin{pmatrix} Y_0 \\ Y_1 \\ Y_2 \end{pmatrix} = M \begin{pmatrix} X_0 \\ X_1 \\ X_2 \end{pmatrix} \text{ with M} = \begin{pmatrix} g_{0,0} & g_{0,1} & g_{0,2} \\ g_{1,0} & g_{1,1} & g_{1,2} \\ g_{2,0} & g_{2,1} & g_{2,2} \end{pmatrix}$$

For a set of samples $(X_0, X_1, X_2)$, $Y_i$), a quadratic error is $Err_i = (Y_i - m_i(X_0, X_1, X_2))^2$ is calculated and a Least Mean Squares method then consists in solving a system of 9 equations built from the partial derivative of $mi()$ respectively to $g_{i,j}$ with i=0,1,2 and j=0,1,2.

On **Fig. 1-8,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a blend of hardware and software components.

**Fig. 9** represents an exemplary architecture of a device 900 which may be configured to implement a method described in relation with **Fig. 1-8.**

Device 900 comprises following elements that are linked together by a data and address bus 901:

- a microprocessor 902 (or CPU), which is, for example, a DSP (or Digital Signal Processor);
- a ROM (or Read Only Memory) 903;
- a RAM (or Random Access Memory) 904;
- an I/O interface 905 for reception of data to transmit, from an application; and
- a battery 906

According to a variant, the battery 906 is external to the device. Each of these elements of **Fig. 9** are well-known by those skilled in the art and won't be disclosed further. In each of mentioned memory, the word « register» used in the specification can correspond to area of small capacity (some bits) or to very large area (e.g. a whole program or large amount of received or decoded data). ROM 903 comprises at least a program and parameters. Algorithm of the methods according to the disclosure is stored in the ROM 903. When switched on, the CPU 902 uploads the program in the RAM and executes the corresponding instructions.

RAM 904 comprises, in a register, the program executed by the CPU 902 and uploaded after switch on of the device 900, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of the method or device for estimating a color mapping, the first and second color-graded version of the picture are obtained from a source. For example, the source belongs to a set comprising:

- a local memory (903 or 904), e.g. a video memory or a RAM (or Random Access Memory), a flash memory, a ROM (or Read Only Memory), a hard disk ;
- a storage interface (905), e.g. an interface with a mass storage, a RAM, a flash memory, a ROM, an optical disc or a magnetic support;
- a communication interface (907), e.g. a wireline interface (for example a bus interface, a wide area network interface, a local area network interface) or a wireless interface (such as a IEEE 802.11 interface or a Bluetooth® interface); and
- an picture capturing circuit (e.g. a sensor such as, for example, a CCD (or Charge-Coupled Device) or CMOS (or Complementary Metal-Oxide-Semiconductor)).

According to different embodiments, device 900 being configured to implement the method or device for estimating a color mapping described in relation with **Fig. 1-8,** belongs to a set comprising:

- a mobile device ;
- a communication device ;
- a game device ;
- a tablet (or tablet computer) ;
- a laptop ;
- a still picture camera;
- a video camera ;
- an encoding chip;
- a still picture server; and
- a video server (e.g. a broadcast server, a video-on-demand server or a web server).
- a mobile device;
- a communication device ;
- a game device;
- a set top box;
- a TV set;
- a tablet (or tablet computer) ;
- a laptop ;
- a display and
- a decoding chip.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or any other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

### Claims

1. A method for estimating a color mapping between a first and a second color-graded version of a picture by iteratively estimating a color mapping function that maps each color value of said first color-graded version of the picture represented in a first color volume onto a color value of said second color-graded version of the picture represented in a second color volume, **characterized in that** it comprises obtaining (100) a first estimate of the color mapping by:

   - obtaining (200) a first sub-set of color values from the color values of said first color-graded version of the picture and a second sub-set of color values from the color values of said second color-graded version of the picture; ;
   - obtaining (220) iteratively the first estimate of the color mapping function, from a default color mapping, by mapping the first set of color values onto the second set of color values.

2. The method of the claim 1, wherein the first set of color values and/or the second set of color values is obtained by taking into account a visual human perception model.

3. The method of the claim 1 or 2, wherein the color mapping and/or the default color mapping function is approximated by a three-dimensional look-up-table.

4. The method of claim 3, wherein the first set of color values and/or the second set of color values is obtained either from color values associated with vertices of the three-dimensional look-up-table or by interpolating color values associated with vertices of the three-dimensional look-up-table or both.

5. The method of one of claims 1-4, wherein the default color mapping function and/or the color mapping function comprises at least one color transforms, each color transform being approximated by a one-dimensional look-up-table.

6. The method of one of claims 1-5, wherein the color mapping and/or the default color mapping comprises a color transform which is represented by a matrix.

7. The method of one of claims 1-6, wherein the color mapping function comprises a first and a second color transforms, and wherein obtaining the first estimate of the color mapping function by mapping the first set of color values onto the second set of color values comprises:

   g) obtaining a third set of color values (S3) by applying the first color transform ($F1^{k-1}$) estimated at iteration k-1 to the first sub-set of color values (S1);
   h) estimating a third color transform ($F3^k$) by mapping the second sub-set of color values (S2) onto the third set of color values (S3);

i) obtaining a fourth set of color values (S4) by applying said third color transform ($F3^k$) to the second sub-set of color values (S2);

j) estimating the first color transform ($F1^k$) by mapping the first sub-set of color values (S1) onto said fourth set of color values (S4); said first color transform ($F1^k$) is used for updating the first color transform ($F1^{k-1}$) estimated at iteration k-1;

k) obtaining a fifth set of color values (S5) by applying said first color transform ($F1^k$) to the first sub-set of color values (S1); and

l) estimating the second color transform ($F2^k$) by mapping the fifth set of color values S5 onto the second sub-set of color values.

8.  A method of one of claims 1-7, wherein the method further comprises obtaining iteratively a final estimate of the color mapping from the first estimate of the color mapping by mapping the color values of the first color-graded version of the picture onto the color values of the second color-graded version of said picture.

9.  A device for estimating a color mapping between a first and a second color-graded version of a picture, the device comprising a processor configured to iteratively estimate a color mapping function that maps each color value of said first color-graded version of the picture represented in a first color volume onto a color value of said second color-graded version of the picture represented in a second color volume, **characterized in that** the processor is further configured to obtain a first estimate of the color mapping by:

    - obtaining a first sub-set of color values from the color values of said first color-graded version of the picture and a second sub-set of color values from the color values of said second color-graded version of the picture; ;
    - obtaining iteratively the first estimate of the color mapping function, from a default color mapping, by mapping the first set of color values onto the second set of color values.

10. A computer program product comprising program code instructions to execute the steps of the method according to any one of the claims 1 to 8 when this program is executed on a computer.

11. A processor readable medium having stored therein instructions for causing a processor to perform at least the steps of the method according to any one of the claims 1 to 8.

12. Non-transitory storage medium carrying instructions of program code for executing steps of the method according to one of claims 1 to 8, when said program is executed on a computing device.

**Fig. 1**

**Fig. 2**

**Fig. 3**

**Fig. 4**

**Fig. 5**

**Fig. 6**

**Fig. 7**

**Fig. 8**

**Fig. 9**

Europäisches
Patentamt

European
Patent Office

Office européen
des brevets

# EUROPEAN SEARCH REPORT

Application Number

EP 15 30 6188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAKAUCHI S ET AL: "COLOR GAMUT MAPPING BASED ON A PERCEPTUAL IMAGE DIFFERENCE MEASURE", COLOR RESEARCH & APPLICATION, JOHN WILEY & SONS, INC, US, vol. 24, no. 4, 1 August 1999 (1999-08-01), pages 280-291, XP008019226, ISSN: 0361-2317, DOI: 10.1002/(SICI)1520-6378(199908)24:4<280::AID-COL8>3.0.CO;2-# * the whole document * | 1-12 | INV. H04N1/60 G06T5/00 |
| X | BINH PHAM ET AL: "COLOR CORRECTION FOR AN IMAGE SEQUENCE", IEEE COMPUTER GRAPHICS AND APPLICATIONS, IEEE SERVICE CENTER, NEW YORK, NY, US, vol. 15, no. 3, 1 May 1995 (1995-05-01), pages 38-42, XP000511049, ISSN: 0272-1716 | 1,9-12 | |
| A | * the whole document * | 2-8 | |
| E | WO 2015/144566 A1 (THOMSON LICENSING [FR]) 1 October 2015 (2015-10-01) * page 4, line 11 - page 8, line 33; figures 4-7 * | 1,9-12 | TECHNICAL FIELDS SEARCHED (IPC) H04N G06T |
| A | US 2001/028736 A1 (PETTIGREW DANIEL [CA] ET AL) 11 October 2001 (2001-10-11) * paragraph [0035] - paragraph [0053]; figures 5,6 * | 1-12 | |
| A | US 2014/233914 A1 (WILLIAMS WAYNE [US]) 21 August 2014 (2014-08-21) * abstract * * paragraph [0046] * | 1-12 | |

The present search report has been drawn up for all claims

| Place of search | Date of completion of the search | Examiner |
|---|---|---|
| Munich | 21 January 2016 | Bakstein, Hynek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6188

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2016

| Patent document cited in search report | Publication date | Patent family member(s) | Publication date |
|---|---|---|---|
| WO 2015144566 A1 | 01-10-2015 | NONE | |
| US 2001028736 A1 | 11-10-2001 | GB 2363020 A<br>US 2001028736 A1<br>US 2004170317 A1<br>US 2005041854 A1 | 05-12-2001<br>11-10-2001<br>02-09-2004<br>24-02-2005 |
| US 2014233914 A1 | 21-08-2014 | CN 105122795 A<br>US 2014233914 A1<br>WO 2014130575 A1 | 02-12-2015<br>21-08-2014<br>28-08-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CANTONI et al.** Optimal Curve Fitting With Piecewise Linear Functions. *IEEE Transactions on Computers,* January 1971, vol. C-20 (1